# EUROPEAN PATENT SPECIFICATION

(11) **EP 4 173 190 B1**
(45) Date of publication and mention of the grant of the patent: **07.08.2024**
(21) Application number: 21733358.2
(22) Date of filing: 03.06.2021
(51) Int. Cl.: H04L 1/1607, H04L 1/1825, H04L 27/26, H04L 27/34, H04L 25/03, H04L 1/00, H04L 5/00

(54) **PEAK SUPPRESSION INFORMATION MESSAGE AS RETRANSMISSION**
SPITZENUNTERDRÜCKUNGSINFORMATIONSNACHRICHT ALS NEUÜBERTRAGUNG
MESSAGE D'INFORMATION DE SUPPRESSION DE PIC COMME RETRANSMISSION

(30) Priority: 30.06.2020 US 202063046420 P; 02.06.2021 US 202117303568
(43) Date of publication of application: 03.05.2023
(73) Proprietor: QUALCOMM Incorporated, San Diego, CA 92121-1714 (US)
(72) Inventor: WOLF, Guy, San Diego, California 92121 (US); EGER, Ory, San Diego, California 92121 (US); TOUBOUL, Assaf, San Diego, California 92121 (US); BEN SHAHAR, Ori, San Diego, California 92121 (US)
(74) Representative: Tomkins & Co
(86) International application number: PCT/US2021/070657
(87) International publication number: WO 2022/006571

(56) References cited:
- US-A1- 2011 273 999
- US-A1- 2013 265 973

## Description

### CROSS-REFERENCE TO RELATED APPLICATIONS

This Patent Application claims priority to U.S. Provisional Patent Application No. 63/046,420, filed on June 30, 2020, entitled "PEAK SUPPRESPSION INFORMATION MESSAGE AS RETRANSMISSION," and U.S. Nonprovisional Patent Application No. 17/303,568, filed on June 2, 2021, entitled "PEAK SUPPRESSION INFORMATION MESSAGE AS RETRANSMISSION".

### FIELD OF THE DISCLOSURE

Aspects of the present disclosure generally relate to wireless communication and to techniques and apparatuses for peak suppression information message (PSIM) retransmission.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or "forward link") refers to the communication link from the BS to the UE, and "uplink" (or "reverse link") refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful.

US 2013/265973 discloses a clipping unit that clips the frequency spectrum for N_{CLIP} points from a frequency spectrum S(m, N) for N_{DFT} points input from a buffer unit (referred to as clip processing). Specifically, when an automatic retransmission request information input from a response signal extraction unit represents an ACK, that is to say, a first transmission opportunity, the clipping unit clips the spectrum from the N_{CLIP} points having high frequencies from the N_{DFT} points, that is to say the high-frequency frequency spectrum. Conversely, when the automatic retransmission request information is representing a NAK input from the response signal extraction unit, that is to say, the retransmission opportunity, the clipping unit clips the spectrum from the N_{CLIP} points having low frequencies from the N_{DFT} points, that is to say, the low-frequency spectrum for the N_{CLIP} points. That is to say, the clipping unit clips frequency components from the frequency spectrum to be retransmitted that is different from the frequency spectrum previously transmitted (the first transmission opportunity according to the present embodiment).

### SUMMARY

In some aspects, a method of wireless communication, performed by a user equipment, may include receiving a negative acknowledgement message indicating a failure to successfully, autonomously recover a compressed transmission including a saturated signal; and transmitting a retransmission to enable distortion recovery on the compressed transmission based at least in part on receiving the negative acknowledgement.

In some aspects, a method of wireless communication, performed by a base station, may include transmitting a negative acknowledgement message indicating a failure to successfully, autonomously recover a compressed transmission including a saturated signal; and receiving a retransmission to enable distortion recovery on the compressed transmission based at least in part on transmitting the negative acknowledgement.

In some aspects, a user equipment for wireless communication may include a memory and one or more processors coupled to the memory. The memory and the one or more processors may be configured to receive a negative acknowledgement message indicating a failure to successfully, autonomously recover a compressed transmission including a saturated signal; and transmit a retransmission to enable distortion recovery on the compressed transmission based at least in part on receiving the negative acknowledgement.

In some aspects, a base station for wireless communication may include a memory and one or more processors coupled to the memory. The memory and the one or more processors may be configured to transmit a negative acknowledgement message indicating a failure to successfully, autonomously recover a compressed transmission including a saturated signal; and receive a retransmission to enable distortion recovery on the compressed transmission based at least in part on transmitting the negative acknowledgement.

In some aspects, a non-transitory computer-readable medium may store one or more instructions for wireless communication. The one or more instructions, when executed by one or more processors of a user equipment, may cause the one or more processors to receive a negative acknowledgement message indicating a failure to successfully, autonomously recover a compressed transmission including a saturated signal; and transmit a retransmission to enable distortion recovery on the compressed transmission based at least in part on receiving the negative acknowledgement.

In some aspects, a non-transitory computer-readable medium may store one or more instructions for wireless communication. The one or more instructions, when executed by one or more processors of a base station, may cause the one or more processors to transmit a negative acknowledgement message indicating a failure to successfully, autonomously recover a compressed transmission including a saturated signal; and receive a retransmission to enable distortion recovery on the compressed transmission based at least in part on transmitting the negative acknowledgement.

In some aspects, an apparatus for wireless communication may include means for receiving a negative acknowledgement message indicating a failure to successfully, autonomously recover a compressed transmission including a saturated signal; and means for transmitting a retransmission to enable distortion recovery on the compressed transmission based at least in part on receiving the negative acknowledgement.

In some aspects, an apparatus for wireless communication may include means for transmitting a negative acknowledgement message indicating a failure to successfully, autonomously recover a compressed transmission including a saturated signal; and means for receiving a retransmission to enable distortion recovery on the compressed transmission based at least in part on transmitting the negative acknowledgement.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, or artificial intelligence-enabled devices). Aspects may be implemented in chip-level components, modular components, non-modular components, non-chip-level components, device-level components, or system-level components. Devices incorporating described aspects and features may include additional components and features for implementation and practice of claimed and described aspects. For example, transmission and reception of wireless signals may include a number of components for analog and digital purposes (e.g., hardware components including antennas, RF chains, power amplifiers, modulators, buffers, processor(s), interleavers, adders, or summers). It is intended that aspects described herein may be practiced in a wide variety of devices, components, systems, distributed arrangements, or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a UE in a wireless network, in accordance with the present disclosure.
Figs. 3A-3B are diagrams illustrating examples associated with a transmit chain and a receive chain for peak suppression information message (PSIM) retransmission, in accordance with the present disclosure.
Fig. 4 is a diagram illustrating an example associated with PSIM retransmission, in accordance with the present disclosure
Figs. 5-6 are diagrams illustrating example processes associated with PSIM retransmission, in accordance with the present disclosure.
Figs. 7-8 are block diagrams of example apparatuses for wireless communication, in accordance with the present disclosure.

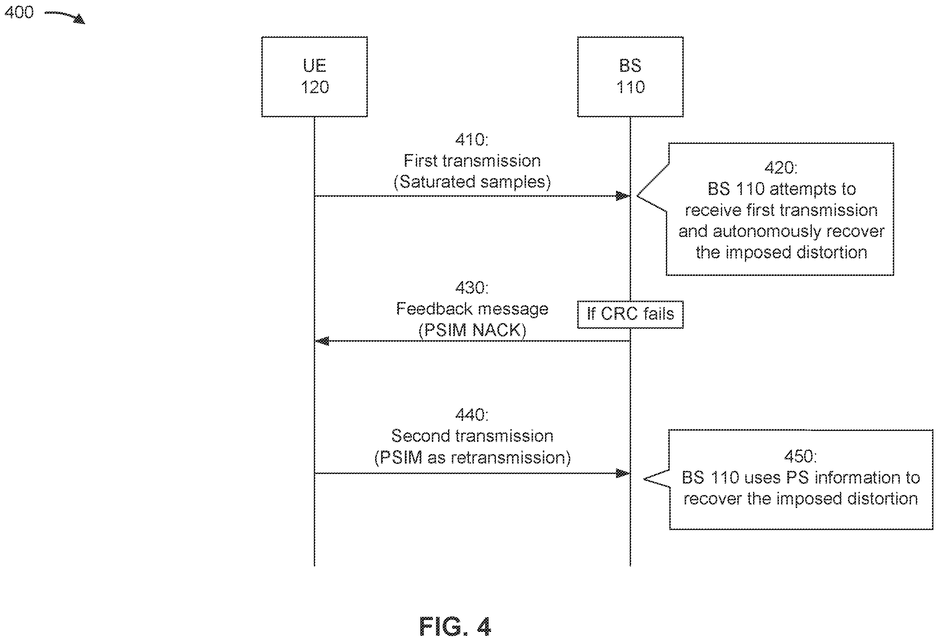

Figure 4 and the related parts of the description is the embodiment being the most pertinent when understanding the invention.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

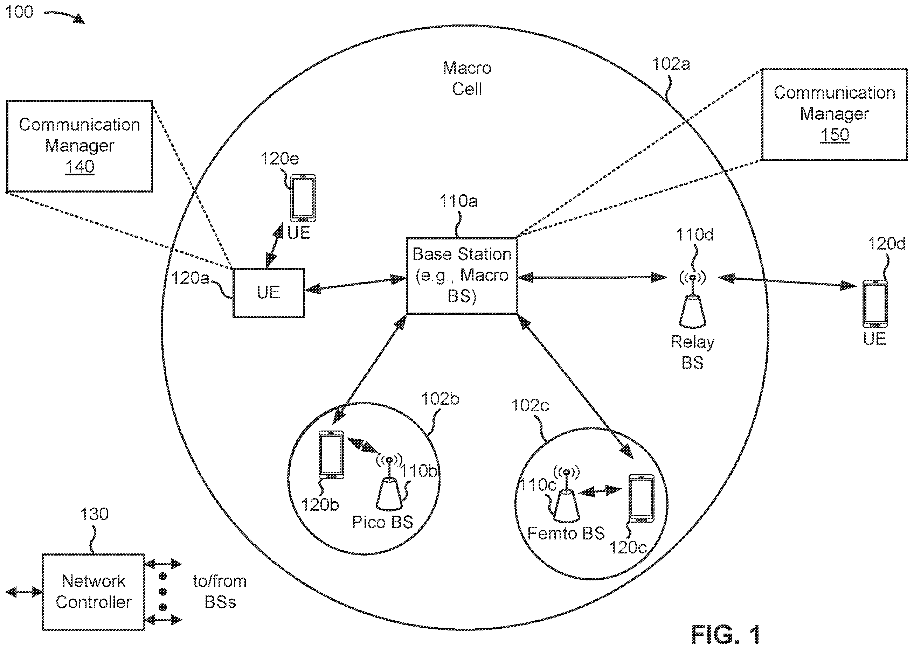

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

In some aspects, the UE 120 may include a communication manager 140. As described in more detail elsewhere herein, the communication manager 140 may receive a negative acknowledgement message indicating a failure to successfully, autonomously recover a compressed transmission including a saturated signal; and transmit a retransmission to enable distortion recovery on the compressed transmission based at least in part on receiving the negative acknowledgement. Additionally, or alternatively, the communication manager 140 may perform one or more other operations described herein.

In some aspects, the base station 110 may include a communication manager 150. As described in more detail elsewhere herein, the communication manager 150 may transmit a negative acknowledgement message indicating a failure to successfully, autonomously recover a compressed transmission including a saturated signal; and receive a retransmission to enable distortion recovery on the compressed transmission based at least in part on receiving the negative acknowledgement. Additionally, or alternatively, the communication manager 150 may perform one or more other operations described herein.

As indicated above, Fig. 1 is provided as an example. Other examples may differ from what is described with regard to Fig. 1.

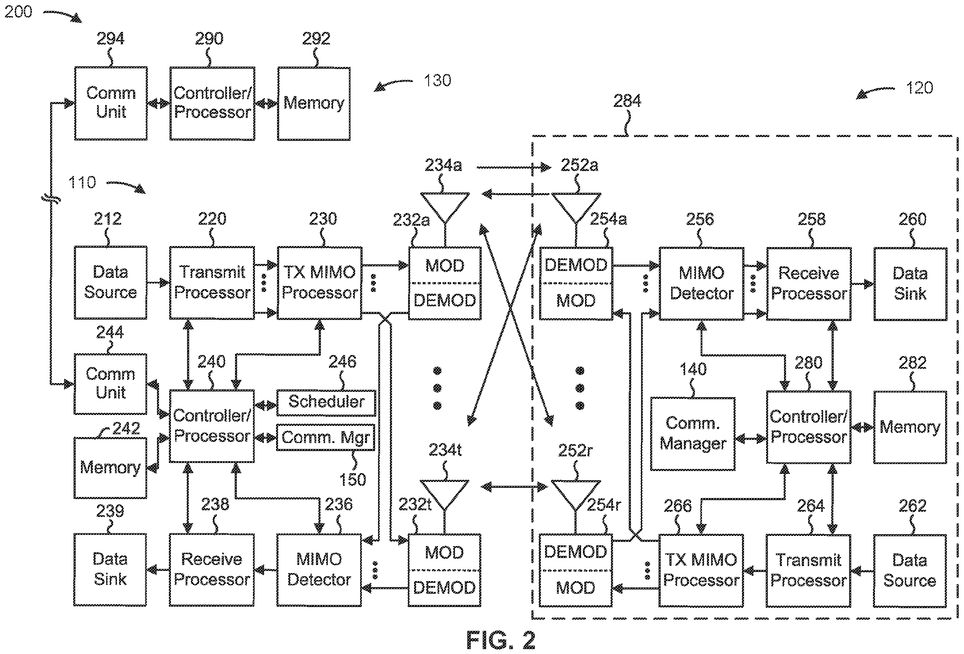

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a channel quality indicator (CQI) parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 4-6).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 4-6).

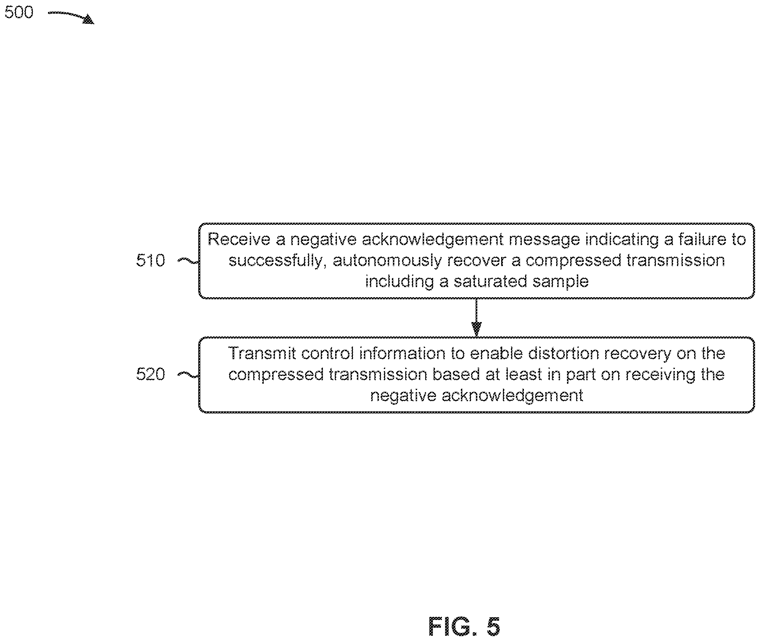

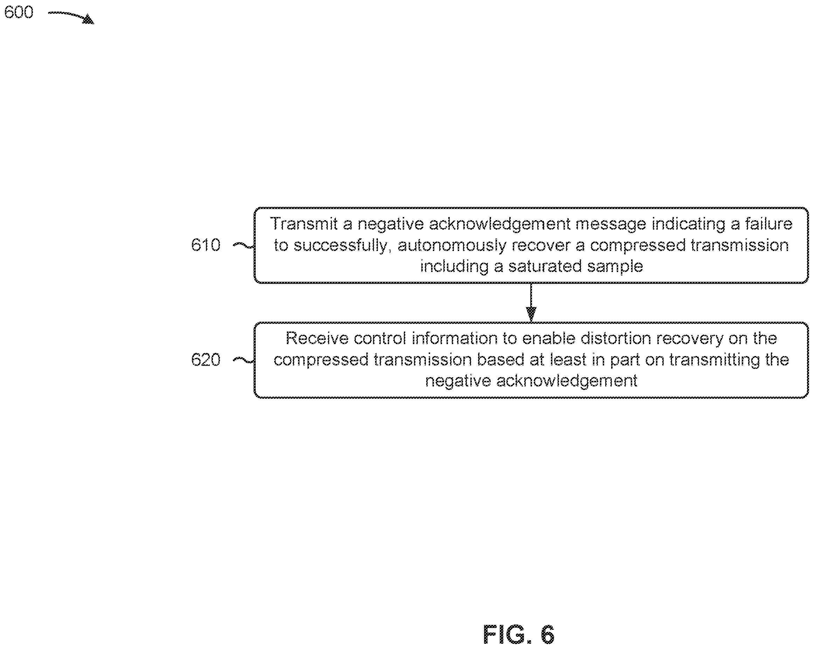

Controller/processor 240 of base station 110, controller/processor 280 of UE 120, and/or any other component(s) of Fig. 2 may perform one or more techniques associated with peak suppression information message (PSIM) retransmission, as described in more detail elsewhere herein. For example, controller/processor 240 of base station 110, controller/processor 280 of UE 120, and/or any other component(s) of Fig. 2 may perform or direct operations of, for example, process 500 of Fig. 5, process 600 of Fig. 6, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 500 of Fig. 5, process 600 of Fig. 6, and/or other processes as described herein. In some aspects, executing instructions may include running the instructions, converting the instructions, compiling the instructions, and/or interpreting the instructions, among other examples.

In some aspects, the user equipment includes means for receiving a negative acknowledgement message indicating a failure to successfully, autonomously recover a compressed transmission including a saturated signal; and/or means for transmitting a retransmission to enable distortion recovery on the compressed transmission based at least in part on receiving the negative acknowledgement. The means for the user equipment to perform operations described herein may include, for example, one or more of communication manager 140, antenna 252, demodulator 254, MIMO detector 256, receive processor 258, transmit processor 264, TX MIMO processor 266, modulator 254, controller/processor 280, or memory 282.

In some aspects, the base station includes means for transmitting a negative acknowledgement message indicating a failure to successfully, autonomously recover a compressed transmission including a saturated signal; and/or means for receiving a retransmission to enable distortion recovery on the compressed transmission based at least in part on receiving the negative acknowledgement. The means for the base station to perform operations described herein may include, for example, one or more of communication manager 150, transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

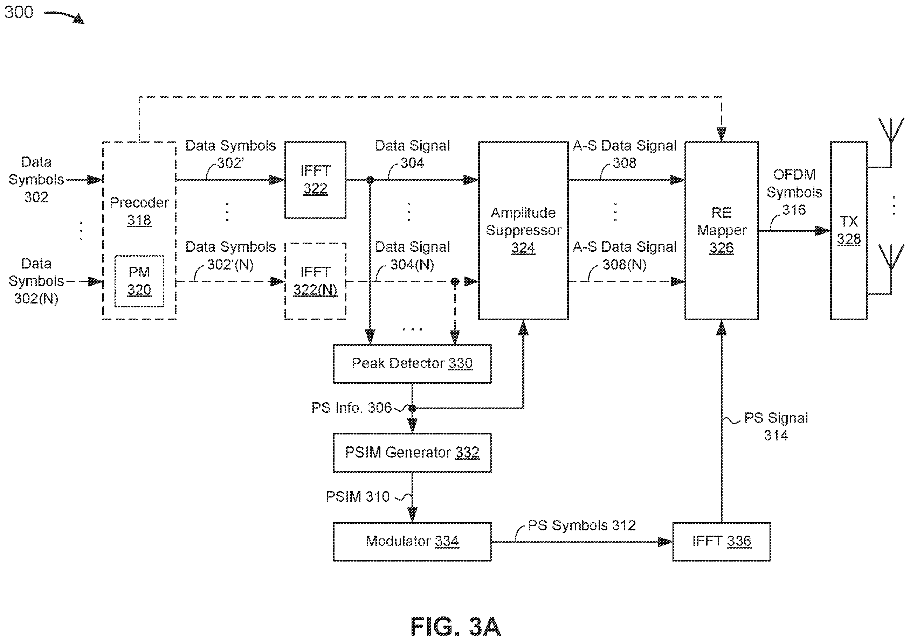

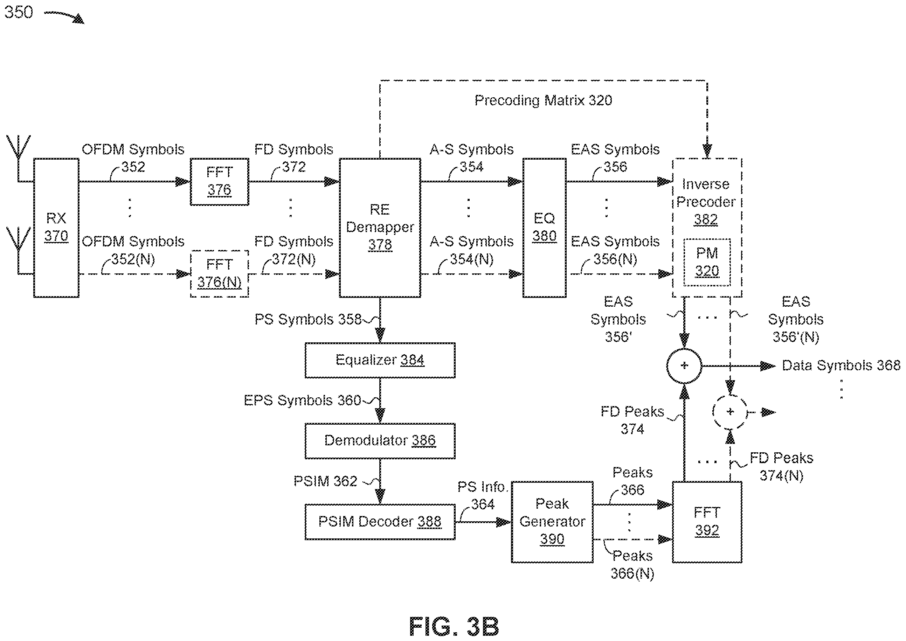

Figs. 3A and 3B are diagrams illustrating an example of a transmit (TX) chain 300 and a receive (RX) chain 350 for peak suppression information message (PSIM) retransmission, in accordance with the present disclosure.

Fig. 3A shows an example TX chain 300 of a transmitter device (e.g., UE 120). Example components of the TX chain 300 may include controller/processor 280, transmit processor 264, TX MIMO processor 266, modulator 254, antenna 252, and/or the like. As shown in Fig. 3, solid lines depict data paths used for MIMO and non-MIMO aspects of the TX chain 300, and dashed lines depict additional data paths used only for MIMO implementations of the TX chain 300.

The TX chain 300 includes a first inverse fast Fourier transform (IFFT) module 322, an amplitude suppressor 324, a resource element (RE) mapper 326, a transmitter (TX) 328, a peak detector 330, a peak suppression information message (PSIM) generator 332, a modulator 334, and a second IFFT module 336. For non-MIMO implementations, the TX chain 300 may obtain data symbols 302 to be transmitted to a receiver device. The data symbols 302 may be modulated using various digital modulation techniques. Example modulation techniques include, but are not limited to, phase-shift keying (PSK) and quadrature amplitude modulation (QAM). Thus, each of the data symbols 302 may correspond to a point on a constellation graph of the in-phase (I) and quadrature (Q) components of the modulated subcarriers. Each constellation point can be represented by a modulated amplitude and phase.

The IFFT module 322 converts the data symbols 302 from the frequency domain to the time domain. For example, the IFFT module 322 may produce a series of time-varying samples representative of the data symbols 302. In some aspects, the data symbols 302 may be parallelized (by a serial-to-parallel converter, not shown for simplicity) at the input of the IFFT module 322, and the resulting samples may be serialized (by a parallel-to-serial converter, not shown for simplicity) at the output of the IFFT module 322. The sequence of samples output by the IFFT module 322 represents a time-domain data signal 304. In some instances, the data signal 304 may include one or more samples (or peaks) having amplitudes that are substantially higher than the average amplitude of the remaining samples. Such samples may be referred to herein as "peaks," and the amplitudes of the samples may be referred to as "peak amplitudes." The presence of the peaks may significantly increase the peak to average power ratio (PAPR) of a data signal 304.

In some implementations, the TX chain 300 may be configured to reduce or mitigate the PAPR of the data signal 304 by suppressing the amplitudes of one or more peaks. For example, the peak detector 330 may detect one or more peaks in the data signal 304 and generate peak suppression (PS) information 306 describing or identifying the detected peaks. The PS information 306 may include the positions, amplitudes, and phases of the peaks. In some aspects, the PS information 306 may be provided to the amplitude suppressor 324. The amplitude suppressor 324 may adjust the data signal 304 by reducing or suppressing the amplitudes of the samples associated with the peaks. More specifically, the amplitude suppressor 324 may generate an amplitude-suppressed (A-S) data signal 308 by replacing or substituting each of the peak amplitudes in the data signal 304 with a suppressed amplitude. In some implementations, the suppressed amplitude may be a known or preconfigured amplitude value that is less than or equal to a corresponding amplitude threshold. As a result, the PAPR of A-S data signal 308 is significantly lower than the PAPR of the original data signal 304.

Clipping, chopping, or reducing the peak amplitudes of a data signal may degrade error vector magnitude (EVM) at the transmitter. For example, the EVM of the A-S data signal 308 may be worse than the EVM of the original data signal 304. In some implementations, the TX chain 300 may provide or otherwise indicate the PS information 306 to the receiver device to compensate for the degradation in EVM of the A-S data signal 308. For example, the PSIM generator 332 may generate a PSIM 310 based on the PS information 306. In some aspects, the PSIM 310 may include raw data representative of the PS information 306 (including the position, amplitude, and phase of each peak).

In some other aspects, the PSIM 310 may be a compressed form of the PS information 306. For example, the amplitude suppressor 324 may not alter the phases of the data signal 304 when generating the A-S data signal 308. Accordingly, the phase information may be excluded from the PSIM 310 to reduce the overhead of the message. The peak amplitudes also may be represented as polar amplitudes in the PSIM 310. By using a polar representation, the amplitudes of the peaks may be reduced without changing their phases. Other suitable compression techniques may include, but are not limited to, wavelet compression, per-antenna representation of the position of each peak, analog coding, and limiting the peak position vector to a number of known options.

The modulator 334 maps the PSIM 310 to one or more PS symbols 312 using digital modulation techniques. Example modulation techniques include, but are not limited to, phase-shift keying (PSK) and quadrature amplitude modulation (QAM). The IFFT module 336 then converts the PS symbols 312 from the frequency domain to the time domain. For example, the IFFT module 336 may produce a series of time-varying samples representative of the PS symbols 312. In some aspects, the PS symbols 312 may be parallelized (by a serial-to-parallel converter, not shown for simplicity) at the input of the IFFT module 336, and the resulting samples may be serialized (by a parallel-to-serial converter, not shown for simplicity) at the output of the IFFT module 336. The sequence of samples output by the IFFT module 336 represents a time-domain PS signal 314.

The RE mapper 326 is configured to map the A-S data signal 308 and the PS signal 314 to one or more OFDM symbols 316. In some aspects, the PSIM may be implemented as a special control channel. In some other aspects, the PSIM may be implemented as part of a physical downlink control channel (PDCCH). In some aspects, the PSIM may be implemented as part of a physical downlink shared channel (PDSCH). In some implementations, the RE mapper 326 may map the A-S data signal 308 and the PS signal 314 to different OFDM symbols 316 of the same subframe. However, as described in more detail below, transmitting the PSIM may be unnecessary, as a receiver device associated with receive chain 350 may be capable of decoding the OFDM symbols 316 encapsulating the A-S data signal 308 without the PS information. Thus, some aspects described herein may forgo including the PS signal 314 in OFDM symbols 316 (and transmitting the PSIM approximately concurrently with A-S data signal 308). In this case, TX chain 300 may delay transmission of the PSIM until the transmitter device receives feedback from the receiver device indicating a failure of RX receive chain 350 to successfully decode A-S data signal 308.

Returning to TX chain 300, the OFDM symbols 316 are provided to the transmitter 328 for transmission, over a wireless channel, to the receiver device. The transmitter 328 may include one or more power amplifiers to amplify the OFDM symbols 316 transmitted via one or more TX antennas. As described above, the operating range of the power amplifier may depend on the PAPR of the OFDM symbols 316. Because the A-S data signal 308 has a significantly lower PAPR than the original data signal 304, suppressing peaks in data signal 304 may improve the efficiency of the power amplifier while reducing the power consumption of the transmitter device.

MIMO implementations of the TX chain 300 may additionally include a precoder 318 and a number (N) of first IFFT modules 322. The precoder 318 may apply a precoding matrix (PM) 320 to a number (N) of parallel streams of data symbols 302 to produce a corresponding number (N) of pre-coded data symbols 302'. The pre-coded data symbols 302' are weighted based on the precoding matrix 320 for optimal MIMO transmissions given the channel conditions of the wireless channel. In some implementations, the transmitter device may provide an indication of the precoding matrix 320 to the receiver device for purposes of reconstructing the data symbols 302. In some implementations, the indication may be transmitted in downlink control information (DCI) messages on a per-slot basis. In some other implementations, the indication may be periodically transmitted in MAC control elements (CEs) after a given number (M) of slots.

Still further, in some implementations, the transmitter device may transmit a channel state information (CSI) reference signal (RS) to the receiver device. The receiver device may estimate the channel conditions of the wireless channel based on the CSI RS and report a precoding matrix indicator (PMI) back to the transmitter device indicating a recommended precoding matrix to be used, given the channel conditions of the wireless channel. In some aspects, the transmitter device may use the precoding matrix recommended by the receiver device. Accordingly, the transmitter device may indicate, in the PDCCH, that the precoding matrix 320 is the same as (or matches) the recommended precoding matrix indicated by the PMI.

For MIMO implementations, the TX chain 300 may perform substantially the same operations as the non-MIMO implementations of the TX chain 300 on multiple concurrent or parallel streams of data symbols 302. For example, the N IFFT modules 322 may concurrently convert N streams of data symbols 302' to N data signals 304, respectively. The peak detector 330 may generate PS information 306 for each of the N data signals 304. The amplitude suppressor 324 may use the PS information 306 to produce N A-S data signals 308 by suppressing peak amplitudes in the N data signals 304, respectively. The PSIM generator 332 may generate a PSIM 310 based on the PS information 306, the modulator 334 may map the PSIM 310 to one or more PS symbols 312, and the IFFT module 336 may convert the PS symbols 312 to a PS signal 314. The RE mapper 326 may map the N A-S data signals 308, together with the PS signal 314, to a number of OFDM symbols 316, and the transmitter 328 may transmit the OFDM symbols 316 concurrently via multiple TX antennas.

Fig. 3B shows an example RX chain 350 of a receiver device (e.g., BS 110) according to some implementations. Components of the RX chain 350 may correspond to antenna 234, demodulator 232, MIMO detector 236, receiver processor 238, controller/processor 240, and/or the like. As shown in Fig. 3B, solid lines depict data paths used for MIMO and non-MIMO implementations of the RX chain 350, and dashed lines depict additional data paths used only for MIMO implementations of the RX chain 350.

The RX chain 350 includes a receiver (RX) 370, a first fast Fourier transform (FFT) module 376, a resource element (RE) demapper 378, a first equalizer (EQ) 380, a second equalizer 384, a demodulator 386, a PSIM decoder 388, a peak generator 390, and a second FFT 392. For non-MIMO implementations, the RX chain 350 may receive OFDM symbols 352 from the transmitter device. The OFDM symbols 352 may be received via one or more antennas of the receiver 370 and amplified by a low-noise amplifier (LNA) within the receiver 370. In some implementations, the OFDM symbols 352 may include an amplitude-suppressed data signal (such as the A-S data signal 308) and a peak suppression signal (such as the PS signal 314). However, as described in more detail herein, including the PSIM with the A-S data signal 308 may result in an excessive utilization of network resources when RX chain 350 is capable of decoding the amplitude-suppressed data signal without the PSIM. Thus, some aspects described herein may cause the PSIM to be transmitted to the receiver device only after the receiver device indicates a failure to decode the amplitude-suppressed data signal without the PSIM.

The FFT module 376 converts the OFDM symbols 352 from the time domain to the frequency domain. For example, the FFT module 376 may produce a series of frequency-domain (FD) symbols 372 representative of the amplitude-suppressed data signal and (if included) the peak suppression signal included in the received OFDM symbols 352. Thus, the resulting FD symbols 372 may include amplitude-suppressed (A-S) symbols 354 and peak suppression (PS) symbols 358 corresponding to the amplitude-suppressed data signal and the peak suppression signal, respectively, in the OFDM symbols 352. In some aspects described herein, the receiver device may receive first OFDM symbols 352 that include only A-S symbols 354 and may process the A-S symbols 354. Later, based at least in part on a failure to decode A-S symbols 354 successfully, the receiver device may receive second OFDM symbols 352 that include only the PS symbols 358 to enable PS information to be used to successfully decode AS symbols 354.

Although aspects described herein separate the A-S symbols 354 and the PS symbols 358 in different sets of OFDM symbols 352, each set of OFDM symbols 352 may include other information. For example, PS symbols 358 may be multiplexed with other A-S symbols 354 to which the PS symbols 358 do not pertain. In this case, RX chain 350 may attempt to decode the other A-S symbols 354 without PS information and may use the PS symbols 358 to decode the originally received A-S symbols 354. In other words, A-S symbols 354 and corresponding PS symbols 358 are transmitted in separate transmissions, but any particular transmission may include A-S symbols 354 and PS symbols 358 that do not correspond to the A-S symbols 354, but that do correspond to some other A-S symbols 354, as described in more detail herein.

In some aspects, the OFDM symbols 352 may be parallelized (by a serial-to-parallel converter, not shown for simplicity) at the input of the FFT module 376, and the resulting FD symbols 372 may be serialized (by a parallel-to-serial converter, not shown for simplicity) at the output of the FFT module 376.

The RE demapper 378 is configured to parse (or demap) the A-S symbols 354 and the PS symbols 358 from the FD symbols 372. In some implementations, the RE demapper 378 may parse the PS symbols 358 from a different OFDM symbol than the A-S symbols 354. In some implementations, the RE demapper 378 may identify the PS symbols 358 based, at least in part, on positions with respect to a PDCCH and/or one or more demodulation reference signals (DMRSs).

The A-S symbols 354 and PS symbols 358 are provided to the equalizers 380 and 384, respectively, to correct for distortions caused by the wireless channel. The first equalizer 380 produces equalized A-S (EAS) symbols 356 as a result of the equalization performed on the A-S symbols 354. The EAS symbols 356 may have a relatively poor (or high) EVM as a result of the peak suppression performed at the transmitter device. Nevertheless, in some cases, as described in more detail herein, the receiver device may be capable of decoding the EAS symbols 356 without PS information (even with the relatively poor EVM). In such a case, forgoing transmitting the PSIM may save network resources. When processing PS information, the second equalizer 384 produces equalized PS (EPS) symbols 360 as a result of the equalization performed on the PS symbols 358.

The demodulator 386 maps (or demaps) the EPS symbols 360 to a peak suppression information message (PSIM) 362 using digital demodulation techniques. More specifically, the demodulator 386 may reverse the modulation performed by the modulator 334. The PSIM decoder 388 decodes the PSIM 362 to recover peak suppression (PS) information 364. As described with respect to Figure 4, the PS information 364 may include the positions, amplitudes, or phases of each peak associated with the A-S symbols 354. In some implementations, information in the PSIM 362 may be compressed. Accordingly, the PSIM decoder 388 may generate the PS information 364 by decompressing the PSIM 362. More specifically, the PSIM decoder 388 may reverse any compression performed by the PSIM generator 332.

The peak generator 390 is configured to recreate one or more peaks 366 based on the PS information 364. For example, after a failure to decode EAS symbols 356 without the PS information, the receiver device may recreate the one or more peaks 366 to enable successful decoding of the EAS symbols 356. Each of the peaks 366 may correspond to a respective sample of the original data signal having an amplitude that exceeds a threshold amplitude level. In some implementations, the peak generator 390 may recreate the peaks 366 in a manner such that they can be substituted for corresponding samples in the amplitude-suppressed data signal. For example, the amplitude of each peak 366 may represent the peak amplitude of the corresponding sample from the original data signal. In some other implementations, the peak generator 390 may recreate the peaks 366 in a manner such that they can be combined or added to the corresponding samples in the amplitude-suppressed data signal. For example, the amplitude of each peak 366 may represent a difference between the peak amplitude and the suppressed amplitude of the corresponding sample.

The FFT 392 converts the peaks 366 from the time domain back to the frequency domain. For example, the FFT 392 may produce a series of frequency-domain (FD) peaks 374 representative of the peaks 366 generated by the peak generator 390. In some aspects, the peaks 366 may be parallelized (by a serial-to-parallel converter, not shown for simplicity) at the input of the FFT 392, and the resulting FD peaks 374 may be serialized (by a parallel-to-serial converter, not shown for simplicity) at the output of the FFT 392.

The FD peaks 374 are then combined with the EAS symbols 356 to produce reconstructed data symbols 368. The data symbols 368 may correspond to the original data symbols 302 to be transmitted by the TX chain 300. The manner in which the EAS symbols 356 and the FD peaks 374 are combined may depend on how the peaks 366 are generated. For example, if the amplitudes of the peaks 366 represent full peak amplitudes, then the FD peaks 374 may be substituted for (or replace) corresponding samples in the EAS symbols 356. On the other hand, if the amplitudes of the peaks 366 represent differences between the peak amplitudes and the suppressed amplitudes, the FD peaks 374 may be added to the corresponding samples in the EAS symbols 356. By combining peak suppression information with amplitude-suppressed data signals, TX chain 300 and RX chain 350 may reduce the power consumption of the transmitter device while maintaining low EVM at the receiver device. By only transmitting the PS information after a failure to decode data without the PS information, the TX chain and RX chain 350 may enable reduced power consumption of the transmitter device, low EVM at the receiver device, and reduced utilization of network resources.

Returning to Fig. 3B, the MIMO implementations of the RX chain 350 may additionally include an inverse precoder 382 and the number (N) of first FFT modules 376. The inverse precoder 382 reverses the precoding performed by the precoder 318. More specifically, the inverse precoder 382 may apply an inverse of the precoding matrix 320 to a number (N) of parallel streams of EAS symbols 356 to produce a corresponding number (N) of unweighted EAS symbols 356'.

For MIMO implementations, the RX chain 350 may perform substantially the same operations as the non-MIMO implementations of the RX chain 350 on multiple concurrent or parallel streams of OFDM symbols 352. For example, the N FFT modules 376 may concurrently convert N streams of OFDM symbols 352 to N streams of FD symbols 372, respectively. The RE demapper 378 may parse PS symbols 358 and N streams of A-S symbols 354 from the N streams of FD symbols 372, and the first equalizer 380 may perform equalization on the N streams of A-S symbols 354 to produce N streams of EAS symbols 356, respectively. The second equalizer 384 may perform equalization on the PS symbols 358 to produce EPS symbols 360, the demodulator 386 may map the EPS symbols 360 to a PSIM 362, and the PSIM decoder 388 may extract or recover PS information 364 from the PSIM 362. The peak generator 390 may generate peaks 366 for N data streams based on the PS information 364, and the FFT 392 may convert the peaks 366 to FD peaks 374 for the N data streams. The FD peaks 374 may then be combined with N streams of EAS symbols 356' to produce N streams of reconstructed data symbols 368, respectively.

As indicated above, Figs. 3A and 3B are provided as an example. Other examples may differ from what is described with respect to Figs. 3A and 3B.

As described above, a transmitter may clip a portion of a time domain sample to reduce a PAPR of the sample. Based at least in part on reducing the PAPR of the sample, the transmitter may transmit the sample with a reduced power back off applied at an amplifier of the transmitter. The portion of the time domain sample remaining after clipping and power back off may be referred to as a saturated distorted sample. Reducing an amount of power back off may result in a higher level of transmission efficiency by increasing an amount of available power that is used for transmission and/or reducing a utilization of transmission power resources relative to applying a higher level of power back off.

To enable recovery of distortion and associated low EVM imposed by clipping, the transmitter may transmit a control message to provide compressed information regarding the saturated distorted sample. For example, the transmitter may transmit a PSIM that includes raw data representative of peak suppression (PS) information removed from the sample. However, in some cases, transmitting the PS information may result in an excessive level of control overhead. Moreover, even without receiving the PS information, in some cases, a receiver may recover all of the information of the sample (e.g., using only the saturated distorted sample). In this case, transmitting the PS information may result in an excessive utilization of network resources.

Some aspects described herein enable PSIM as retransmission. For example, a UE may transmit a saturated signal to a BS without transmitting corresponding PS information. In this case, the BS may attempt to autonomously recover the distortion of the saturated signal and may perform a checksum to determine whether recovery of the saturated signal is successful. If the BS is unsuccessful in recovering the distortion, the BS may transmit a feedback message indicating that the BS is unsuccessful in recovering the distortion, and requesting a retransmission. In this case, rather than retransmitting the complete saturated signal, the UE may transmit the PS information as the retransmission and as a response to receiving the feedback message. Based at least in part on receiving the PS information, the BS may use the PS information to recover the distortion of the saturated signal, as described above. In this way, the UE avoids excessive use of network resources by forgoing transmitting the PS information unless the BS is unable to autonomously recover the distortion of the saturated signal.

Fig. 4 is a diagram illustrating an example 400 of PSIM as retransmission, in accordance with the present disclosure. As shown in Fig. 4, example 400 includes a BS 110 (e.g., a receiver device) and UE 120 (e.g., a transmitter device). Although some aspects are described in terms of a UE 120 transmitting to a BS 110, other devices or combinations of devices are possible.

As further shown in Fig. 4, and by reference number 410, UE 120 may provide a first transmission to BS 110. For example, UE 120 may transmit saturated signals without transmitting a PSIM that includes PS information describing suppressed peaks associated with the saturated signal.

As further shown in Fig. 4, and by reference number 420, BS 110 may attempt to receive and decode the first transmission. For example, BS 110 may receive the first transmission and may attempt to autonomously recover transport blocks of the first transmission using the saturated signal and without PS information conveyed in a PSIM. In this case, BS 110 may perform a checksum, such as a cyclic redundancy check (CRC) to determine whether BS 110 has been successful at autonomously recovering the transport blocks. In this way, when the checksum is successful, BS 110 and UE 120 obviate a need to transmit the PSIM, thereby reducing a utilization of network resources.

As further shown in Fig. 4, and by reference number 430, based at least in part on BS 110 failing to autonomously recover the transport blocks, BS 110 may transmit a feedback message to UE 120. For example, BS 110 may transmit a PSIM negative acknowledgement (NACK) message indicating that BS 110 was unsuccessful at recovering the transport blocks without the PSIM information.

As further shown in Fig. 4, and by reference number 440, UE 120 may provide a second transmission. For example, based at least in part on receiving the PSIM NACK requesting a retransmission, UE 120 may transmit the PSIM as the retransmission, to enable BS 110 to combine the PS information with the first transmission to recover the imposed distortion, as shown by reference number 450. In this way, UE 120 uses selective transmission of PS information to enable reduced PAPR and reduced utilization of network resources. In some aspects, UE 120 and BS 110 may fall back to a hybrid automatic repeat request (HARQ) procedure. For example, when BS 110 still fails to recover the imposed distortion after receiving the PSIM, BS 110 may request that UE 120 and BS 110 switch to HARQ communication to provide improved reliability.

As indicated above, Fig. 4 is provided as an example. Other examples may differ from what is described with respect to Fig. 4.

Fig. 5 is a diagram illustrating an example process 500 performed, for example, by a UE, in accordance with the present disclosure. Example process 500 is an example where the UE (e.g., UE 120 and/or the like) performs operations associated with PSIM as retransmission.

As shown in Fig. 5, in some aspects, process 500 may include receiving a negative acknowledgement message indicating a failure to successfully, autonomously recover a compressed transmission including a saturated signal (block 510). For example, the UE (e.g., using receive processor 258, transmit processor 264, controller/processor 280, memory 282, and/or the like) may receive a negative acknowledgement message indicating a failure to successfully, autonomously recover a compressed transmission including a saturated signal, as described above.

As further shown in Fig. 5, in some aspects, process 500 may include transmitting a retransmission to enable distortion recovery on the compressed transmission based at least in part on receiving the negative acknowledgement (block 520). For example, the UE (e.g., using receive processor 258, transmit processor 264, controller/processor 280, memory 282, and/or the like) may transmit a retransmission to enable distortion recovery on the compressed transmission based at least in part on receiving the negative acknowledgement, as described above.

Process 500 may include additional aspects, such as any single aspect or any combination of aspects described below and/or in connection with one or more other processes described elsewhere herein.

In a first aspect, the retransmission includes information identifying saturated peaks of the compressed transmission.

In a second aspect, alone or in combination with the first aspect, the retransmission includes information associated with increasing a processing signal to noise ratio for the compressed transmission.

In a third aspect, alone or in combination with one or more of the first and second aspects, the failure to successfully, autonomously recover the compressed transmission is a checksum failure.

In a fourth aspect, alone or in combination with one or more of the first through third aspects, process 500 includes identifying a failure to recover the compressed transmission after transmitting the retransmission; and falling back to a hybrid automatic repeat request retransmission procedure based at least in part on identifying the failure to recover the compressed transmission after transmitting the retransmission.

In a fifth aspect, alone or in combination with one or more of the first through fourth aspects, the retransmission includes a power system information message (PSIM).

Although Fig. 5 shows example blocks of process 500, in some aspects, process 500 may include additional blocks, fewer blocks, different blocks, or differently arranged blocks than those depicted in Fig. 5. Additionally, or alternatively, two or more of the blocks of process 500 may be performed in parallel.

Fig. 6 is a diagram illustrating an example process 600 performed, for example, by a BS, in accordance with the present disclosure. Example process 600 is an example where the BS (e.g., BS 110 and/or the like) performs operations associated with PSIM as retransmission.

As shown in Fig. 6, in some aspects, process 600 may include transmitting a negative acknowledgement message indicating a failure to successfully, autonomously recover a compressed transmission including a saturated signal (block 610). For example, the BS (e.g., using transmit processor 220, receive processor 238, controller/processor 240, memory 242, and/or the like) may transmit a negative acknowledgement message indicating a failure to successfully, autonomously recover a compressed transmission including a saturated signal, as described above.

As further shown in Fig. 6, in some aspects, process 600 may include receiving a retransmission to enable distortion recovery on the compressed transmission based at least in part on transmitting the negative acknowledgement (block 620). For example, the BS (e.g., using transmit processor 220, receive processor 238, controller/processor 240, memory 242, and/or the like) may receive a retransmission to enable distortion recovery on the compressed transmission based at least in part on transmitting the negative acknowledgement, as described above.

Process 600 may include additional aspects, such as any single aspect or any combination of aspects described below and/or in connection with one or more other processes described elsewhere herein.

In a first aspect, process 600 includes attempting to autonomously recover and decode transport blocks of the compressed transmission, performing a checksum on the transport blocks of the compressed transmission to determine whether recovery and decoding of the transport blocks of the compressed transmission is successful, and transmitting the negative acknowledgment includes transmitting the negative acknowledgement based at least in part on a result of performing the checksum.

In a second aspect, alone or in combination with the first aspect, process 600 includes attempting to recover and decode transport blocks of the compressed transmission using the retransmission.

In a third aspect, alone or in combination with one or more of the first and second aspects, the retransmission includes information identifying saturated peaks of the compressed transmission.

In a fourth aspect, alone or in combination with one or more of the first through third aspects, the retransmission includes information associated with increasing a processing signal to noise ratio for the compressed transmission.

In a fifth aspect, alone or in combination with one or more of the first through fourth aspects, process 600 includes identifying a failure to recover the compressed transmission after receiving the retransmission; and falling back to a hybrid automatic repeat request retransmission procedure based at least in part on identifying the failure to recover the compressed transmission after receiving the retransmission.

In a sixth aspect, alone or in combination with one or more of the first through fifth aspects, the retransmission includes a power system information message (PSIM).

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

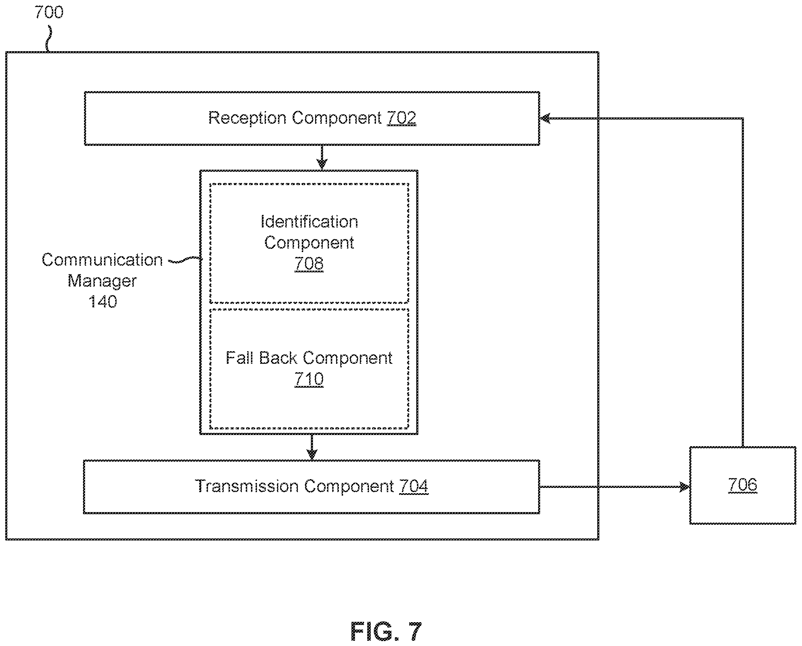

Fig. 7 is a block diagram of an example apparatus 700 for wireless communication. The apparatus 700 may be a UE, or a UE may include the apparatus 700. In some aspects, the apparatus 700 includes a reception component 702 and a transmission component 704, which may be in communication with one another (for example, via one or more buses and/or one or more other components). As shown, the apparatus 700 may communicate with another apparatus 706 (such as a UE, a base station, or another wireless communication device) using the reception component 702 and the transmission component 704. As further shown, the apparatus 700 may include the communication manager 140. The communication manager 140 may include one or more of a identification component 708 or a fall back component 710, among other examples.

In some aspects, the apparatus 700 may be configured to perform one or more operations described herein in connection with Fig. 4. Additionally, or alternatively, the apparatus 700 may be configured to perform one or more processes described herein, such as process 500 of Fig. 5. In some aspects, the apparatus 700 and/or one or more components shown in Fig. 7 may include one or more components of the UE described in connection with Fig. 2. Additionally, or alternatively, one or more components shown in Fig. 7 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 702 may receive communications, such as reference signals, control information, data communications, or a combination thereof, from the apparatus 706. The reception component 702 may provide received communications to one or more other components of the apparatus 700. In some aspects, the reception component 702 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 706. In some aspects, the reception component 702 may include one or more antennas, a demodulator, a MIMO detector, a receive processor, a controller/processor, a memory, or a combination thereof, of the UE described in connection with Fig. 2.

The transmission component 704 may transmit communications, such as reference signals, control information, data communications, or a combination thereof, to the apparatus 706. In some aspects, one or more other components of the apparatus 706 may generate communications and may provide the generated communications to the transmission component 704 for transmission to the apparatus 706. In some aspects, the transmission component 704 may perform signal processing on the generated communications (such as filtering, amplification, modulation, digital-to-analog conversion, multiplexing, interleaving, mapping, or encoding, among other examples), and may transmit the processed signals to the apparatus 706. In some aspects, the transmission component 704 may include one or more antennas, a modulator, a transmit MIMO processor, a transmit processor, a controller/processor, a memory, or a combination thereof, of the UE described in connection with Fig. 2. In some aspects, the transmission component 704 may be co-located with the reception component 702 in a transceiver.

The reception component 702 may receive a negative acknowledgement message indicating a failure to successfully, autonomously recover a compressed transmission including a saturated signal. The transmission component 704 may transmit a retransmission to enable distortion recovery on the compressed transmission based at least in part on receiving the negative acknowledgement.

The identification component 708 may identify a failure to recover the compressed transmission after transmitting the retransmission. The fall back component 710 may fall back to a hybrid automatic repeat request retransmission procedure based at least in part on identifying the failure to recover the compressed transmission after transmitting the retransmission.

The number and arrangement of components shown in Fig. 7 are provided as an example. In practice, there may be additional components, fewer components, different components, or differently arranged components than those shown in Fig. 7. Furthermore, two or more components shown in Fig. 7 may be implemented within a single component, or a single component shown in Fig. 7 may be implemented as multiple, distributed components. Additionally, or alternatively, a set of (one or more) components shown in Fig. 7 may perform one or more functions described as being performed by another set of components shown in Fig. 7.

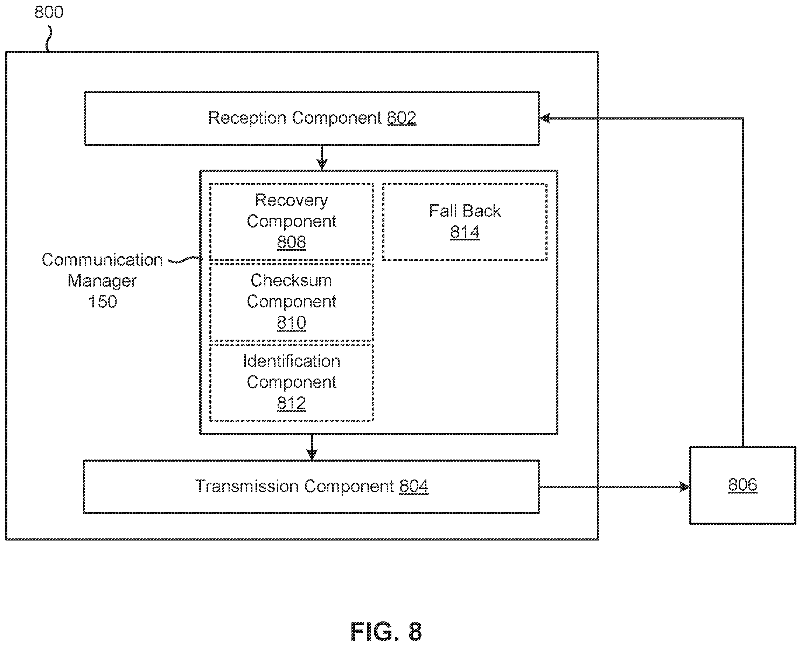

Fig. 8 is a block diagram of an example apparatus 800 for wireless communication. The apparatus 800 may be a base station, or a base station may include the apparatus 800. In some aspects, the apparatus 800 includes a reception component 802 and a transmission component 804, which may be in communication with one another (for example, via one or more buses and/or one or more other components). As shown, the apparatus 800 may communicate with another apparatus 806 (such as a UE, a base station, or another wireless communication device) using the reception component 802 and the transmission component 804. As further shown, the apparatus 800 may include the communication manager 150. The communication manager 150 may include one or more of a recovery component 808, a checksum component 810, an identification component 812, or a fall back component 814, among other examples.

In some aspects, the apparatus 800 may be configured to perform one or more operations described herein in connection with Fig. 4. Additionally, or alternatively, the apparatus 800 may be configured to perform one or more processes described herein, such as process 600 of Fig. 6. In some aspects, the apparatus 800 and/or one or more components shown in Fig. 8 may include one or more components of the base station described in connection with Fig. 2. Additionally, or alternatively, one or more components shown in Fig. 8 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 802 may receive communications, such as reference signals, control information, data communications, or a combination thereof, from the apparatus 806. The reception component 802 may provide received communications to one or more other components of the apparatus 800. In some aspects, the reception component 802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 806. In some aspects, the reception component 802 may include one or more antennas, a demodulator, a MIMO detector, a receive processor, a controller/processor, a memory, or a combination thereof, of the base station described in connection with Fig. 2.

The transmission component 804 may transmit communications, such as reference signals, control information, data communications, or a combination thereof, to the apparatus 806. In some aspects, one or more other components of the apparatus 806 may generate communications and may provide the generated communications to the transmission component 804 for transmission to the apparatus 806. In some aspects, the transmission component 804 may perform signal processing on the generated communications (such as filtering, amplification, modulation, digital-to-analog conversion, multiplexing, interleaving, mapping, or encoding, among other examples), and may transmit the processed signals to the apparatus 806. In some aspects, the transmission component 804 may include one or more antennas, a modulator, a transmit MIMO processor, a transmit processor, a controller/processor, a memory, or a combination thereof, of the base station described in connection with Fig. 2. In some aspects, the transmission component 804 may be co-located with the reception component 802 in a transceiver.

The transmission component 804 may transmit a negative acknowledgement message indicating a failure to successfully, autonomously recover a compressed transmission including a saturated signal. The reception component 802 may receive a retransmission to enable distortion recovery on the compressed transmission based at least in part on receiving the negative acknowledgement.

The recovery component 808 may attempt to autonomously recover and decode transport blocks of the compressed transmission. The checksum component 810 may perform a checksum on the transport blocks of the compressed transmission to determine whether recovery and decoding of the transport blocks of the compressed transmission is successful. The recovery component 808 may attempt to recover and decode transport blocks of the compressed transmission using the retransmission. The identification component 812 may identify a failure to recover the compressed transmission after receiving the retransmission. The fall back component 814 may fall back to a hybrid automatic repeat request retransmission procedure based at least in part on identifying the failure to recover the compressed transmission after receiving the retransmission.

The number and arrangement of components shown in Fig. 8 are provided as an example. In practice, there may be additional components, fewer components, different components, or differently arranged components than those shown in Fig. 8. Furthermore, two or more components shown in Fig. 8 may be implemented within a single component, or a single component shown in Fig. 8 may be implemented as multiple, distributed components. Additionally, or alternatively, a set of (one or more) components shown in Fig. 8 may perform one or more functions described as being performed by another set of components shown in Fig. 8.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A user equipment (120) for wireless communication, comprising:
a memory; and
one or more processors coupled to the memory, the memory and the one or more processors configured to:
transmit a compressed transmission including a saturated signal transmitted without peak suppression information that describes suppressed peaks associated with the saturated signal;
receive, from a base station (110), a negative acknowledgement message indicating a failure to successfully, autonomously recover the compressed transmission; and
transmit, to the base station, a retransmission to enable distortion recovery on the saturated signal based at least in part on receiving the negative acknowledgement message, the retransmission indicating the peak suppression information based at least in part on receiving the negative acknowledgement message.

2. The user equipment of claim 1, wherein the retransmission includes information associated with increasing a processing signal to noise ratio for the compressed transmission.

3. The user equipment of any one of claims 1 to 2, wherein the failure to successfully, autonomously recover the compressed transmission is a checksum failure.

4. The user equipment of any one of claims 1 to 3, wherein the one or more processors are further configured to:
identify a failure to recover the compressed transmission after transmitting the retransmission; and
fall back to a hybrid automatic repeat request retransmission procedure based at least in part on identifying the failure to recover the compressed transmission after transmitting the retransmission.

5. The user equipment of any one of claims 1 to 4, wherein the retransmission includes a power system information message.

6. A base station (110) for wireless communication, comprising:
a memory; and
one or more processors coupled to the memory, the memory and the one or more processors configured to:
receive a compressed transmission including a saturated signal transmitted without peak suppression information that describes suppressed peaks associated with the saturated signal;
transmit, to a user equipment (120), a negative acknowledgement message indicating a failure to successfully, autonomously recover the compressed transmission; and
receive, from the user equipment, a retransmission to enable distortion recovery on the saturated signal based at least in part on transmitting the negative acknowledgement message, the retransmission indicating the peak suppression information based at least in part on receiving the negative acknowledgement message.

7. The base station of claim 6, wherein the one or more processors are further configured to:
attempt to autonomously recover and decode transport blocks of the compressed transmission;
perform a checksum on the transport blocks of the compressed transmission to determine whether recovery and decoding of the transport blocks of the compressed transmission is successful; and
wherein the one or more processors, when configured to transmit the negative acknowledgment, are configured to:
transmit the negative acknowledgement based at least in part on a result of performing the checksum.

8. The base station of any one of claims 6 to 7, wherein the one or more processors are further configured to:
attempt to recover and decode transport blocks of the compressed transmission using the retransmission.

9. The base station of any one of claims 6 to 8, wherein the retransmission includes information associated with increasing a processing signal to noise ratio for the compressed transmission.

10. The base station of any one of claims 6 to 9, wherein the one or more processors are further configured to:
identify a failure to recover the compressed transmission after receiving the retransmission; and
fall back to a hybrid automatic repeat request retransmission procedure based at least in part on identifying the failure to recover the compressed transmission after receiving the retransmission.

11. The base station of any one of claims 6 to 10, wherein the retransmission includes a power system information message.

12. A method (500) of wireless communication performed by a user equipment, comprising:
transmitting a compressed transmission including a saturated signal transmitted without peak suppression information that describes suppressed peaks associated with the saturated signal;
receiving (510), from a base station, a negative acknowledgement message indicating a failure to successfully, autonomously recover the compressed transmission; and
transmitting (520), to the base station, a retransmission to enable distortion recovery on the saturated signal based at least in part on receiving the negative acknowledgement message, the retransmission indicating the peak suppression information based at least in part on receiving the negative acknowledgement message.

13. The method of claim 12, further comprising:
identifying a failure to recover the compressed transmission after transmitting the retransmission; and
falling back to a hybrid automatic repeat request retransmission procedure based at least in part on identifying the failure to recover the compressed transmission after transmitting the retransmission.

14. A method (600) of wireless communication performed by a base station, comprising:
receiving a compressed transmission including a saturated signal transmitted without peak suppression information that describes suppressed peaks associated with the saturated signal;
transmitting (610), to a user equipment, a negative acknowledgement message indicating a failure to successfully, autonomously recover the compressed transmission; and
receiving (620), from the user equipment, a retransmission to enable distortion recovery on the saturated signal based at least in part on receiving the negative acknowledgement message, the retransmission indicating the peak suppression information based at least in part on receiving the negative acknowledgement message.

15. The method of claim 14, further comprising:
identifying a failure to recover the compressed transmission after receiving the retransmission; and
falling back to a hybrid automatic repeat request retransmission procedure based at least in part on identifying the failure to recover the compressed transmission after receiving the retransmission.

## Patentansprüche

1. Ein Benutzergerät (120) für eine drahtlose Kommunikation, aufweisend:
einen Speicher, und
einen oder mehrere Prozessoren, die mit dem Speicher gekoppelt sind, wobei der Speicher und der eine oder die mehreren Prozessoren konfiguriert sind zum:
Senden einer komprimierten Sendung einschließlich eines gesättigten Signals, das ohne Spitzenunterdrückungsinformationen, die mit dem gesättigten Signal assoziierte unterdrückte Spitzen beschreiben, gesendet wird,
Empfangen, von einer Basisstation (110), einer Negativbestätigungsnachricht, die ein Fehlschlagen einer erfolgreichen, autonomen Wiedergewinnung der komprimierten Sendung angibt,
Senden, an die Basisstation, einer erneuten Sendung für das Ermöglichen einer Verzerrungsbeseitigung auf dem gesättigten Signal basierend wenigstens teilweise auf dem Empfangen der Negativbestätigungsnachricht, wobei die erneute Sendung die Spitzenunterdrückungsinformationen basierend wenigstens teilweise auf dem Empfangen der Negativbestätigungsnachricht angibt.

2. Benutzergerät nach Anspruch 1, wobei die erneute Sendung Informationen enthält, die mit dem Erhöhen eines Verarbeitungssignal-zu-Rauschen-Verhältnisses für die komprimierte Sendung assoziiert sind.

3. Benutzergerät nach Anspruch 1 oder 2, wobei das Fehleschlagen der erfolgreichen, autonomen Wiedergewinnung der komprimierten Sendung ein Prüfsummenfehler ist.

4. Benutzergerät nach einem der Ansprüche 1 bis 3, wobei der eine oder die mehreren Prozessoren weiterhin konfiguriert sind zum:
Identifizieren eines Fehlschlagens der Wiedergewinnung der komprimierten Sendung nach dem Senden der erneuten Sendung, und
Zurückfallen zu einer HARQ (Hybrid Automatic Repeat Request)-Neusendungsprozedur basierend wenigstens teilweise auf dem Identifizieren des Fehlschlagens der Wiedergewinnung der komprimierten Sendung nach dem Senden der erneuten Sendung.

5. Benutzergerät nach einem der Ansprüche 1 bis 4, wobei die erneute Sendung eine Leistungssysteminformationen-Nachricht enthält.

6. Eine Basisstation (110) für eine drahtlose Kommunikation, umfassend:
einen Speicher, und
einen oder mehrere Prozessoren, die mit dem Speicher gekoppelt sind, wobei der Speicher und der eine oder die mehreren Prozessoren konfiguriert sind zum:
Empfangen einer komprimierten Sendung einschließlich eines gesättigten Signals, das ohne Spitzenunterdrückungsinformationen, die mit dem gesättigten Signal assoziierte unterdrückte Spitzen beschreiben, gesendet wird,
Senden, an ein Benutzergerät (120), einer Negativbestätigungsnachricht, die ein Fehlschlagen einer erfolgreichen, autonomen Wiedergewinnung der komprimierten Sendung angibt, und
Empfangen, von dem Benutzergerät, einer erneuten Sendung für das Ermöglichen einer Verzerrungsbeseitigung auf dem gesättigten Signal basierend wenigstens teilweise auf dem Senden der Negativbestätigungsnachricht, wobei die erneute Sendung die Spitzenunterdrückungsinformationen basierend wenigstens teilweise auf dem Empfangen der Negativbestätigungsnachricht angibt.

7. Basisstation nach Anspruch 6, wobei der eine oder die mehreren Prozessoren weiterhin konfiguriert sind zum:
Versuchen des autonomen Wiedergewinnens und Decodierens von Transportblöcken der komprimierten Sendung, und
Durchführen einer Prüfsumme auf den Transportblöcken der komprimierten Sendung für das Bestimmen, ob das Wiedergewinnen und Decodieren der Transportblöcke der komprimierten Sendung erfolgreich ist, und
wobei der eine oder die mehreren Prozessoren, wenn sie für das Senden der Negativbestätigung konfiguriert sind, konfiguriert sind zum:
Senden der Negativbestätigung basierend wenigstens teilweise auf einem Ergebnis des Durchführens der Prüfsumme.

8. Basisstation nach Anspruch 6 oder 7, wobei der eine oder die mehreren Prozessoren weiterhin konfiguriert sind zum:
Versuchen des Wiedergewinnens und Decodierens von Transportblöcken der komprimierten Sendung unter Verwendung der erneuten Sendung.

9. Basisstation nach einem der Ansprüche 6 bis 8, wobei die erneute Sendung Informationen enthält, die mit dem Erhöhen eines Verarbeitungssignal-zu-Rauschen-Verhältnisses für die komprimierte Sendung assoziiert sind.

10. Basisstation nach einem der Ansprüche 6 bis 9, wobei der eine oder die mehreren Prozessoren weiterhin konfiguriert sind zum:
Identifizieren eines Fehlschlagens der Wiedergewinnung der komprimierten Sendung nach dem Empfangen der erneuten Sendung, und
Zurückfallen zu einer HARQ (Hybrid Automatic Repeat Request)-Neusendungsprozedur basierend wenigstens teilweise auf dem Identifizieren des Fehlschlagens der Wiedergewinnung der komprimierten Sendung nach dem Empfangen der erneuten Sendung.

11. Basisstation nach einem der Ansprüche 6 bis 10, wobei die erneute Sendung eine Leistungssysteminformationen-Nachricht enthält.

12. Ein Verfahren (500) für eine drahtlose Kommunikation, das durch ein Benutzergerät durchgeführt wird, umfassend:
Senden einer komprimierten Sendung einschließlich eines gesättigten Signals, das ohne Spitzenunterdrückungsinformationen, die mit dem gesättigten Signal assoziierte unterdrückte Spitzen beschreiben, gesendet wird,
Empfangen (510), von einer Basisstation, einer Negativbestätigungsnachricht, die ein Fehlschlagen einer erfolgreichen, autonomen Wiedergewinnung der komprimierten Sendung angibt,
Senden (520), an die Basisstation, einer erneuten Sendung für das Ermöglichen einer Verzerrungsbeseitigung auf dem gesättigten Signal basierend wenigstens teilweise auf dem Empfangen der Negativbestätigungsnachricht, wobei die erneute Sendung die Spitzenunterdrückungsinformationen basierend wenigstens teilweise auf dem Empfangen der Negativbestätigungsnachricht angibt.

13. Verfahren nach Anspruch 12, das weiterhin aufweist:
Identifizieren eines Fehlschlagens der Wiedergewinnung der komprimierten Sendung nach dem Senden der erneuten Sendung, und
Zurückfallen zu einer HARQ (Hybrid Automatic Repeat Request)-Neusendungsprozedur basierend wenigstens teilweise auf dem Identifizieren des Fehlschlagens der Wiedergewinnung der komprimierten Sendung nach dem Senden der erneuten Sendung.

14. Ein Verfahren (600) für eine drahtlose Kommunikation, das durch eine Basisstation durchgeführt wird, aufweisend:
Empfangen einer komprimierten Sendung einschließlich eines gesättigten Signals, das ohne Spitzenunterdrückungsinformationen, die mit dem gesättigten Signal assoziierte unterdrückte Spitzen beschreiben, gesendet wird,
Senden (610), an ein Benutzergerät, einer Negativbestätigungsnachricht, die ein Fehlschlagen einer erfolgreichen, autonomen Wiedergewinnung der komprimierten Sendung angibt, und
Empfangen (620), von dem Benutzergerät, einer erneuten Sendung für das Ermöglichen einer Verzerrungsbeseitigung auf dem gesättigten Signal basierend wenigstens teilweise auf dem Empfangen der Negativbestätigungsnachricht, wobei die erneute Sendung die Spitzenunterdrückungsinformationen basierend wenigstens teilweise auf dem Empfangen der Negativbestätigungsnachricht angibt.

15. Verfahren nach Anspruch 14, das weiterhin aufweist:
Identifizieren eines Fehlschlagens der Wiedergewinnung der komprimierten Sendung nach dem Empfangen der erneuten Sendung, und
Zurückfallen zu einer HARQ (Hybrid Automatic Repeat Request)-Neusendungsprozedur basierend wenigstens teilweise auf dem Identifizieren des Fehlschlagens der Wiedergewinnung der komprimierten Sendung nach dem Empfangen der erneuten Sendung.

## Revendications

1. Équipement utilisateur (120) pour la communication sans fil, comprenant :
une mémoire; et
un ou plusieurs processeurs couplés à la mémoire, la mémoire et le ou les processeurs étant configurés pour :
transmettre une transmission compressée comprenant un signal saturé transmis sans informations de suppression de crête qui décrit les crêtes supprimés associés au signal saturé ;
recevoir, d'une station de base (110), un message d'accusé de réception négatif indiquant un échec de récupération réussie et de façon autonome de la transmission compressée ; et
transmettre, à la station de base, une retransmission pour permettre une récupération de distorsion sur le signal saturé sur la base au moins en partie de la réception du message d'accusé de réception négatif, la retransmission indiquant les informations de suppression de crête sur la base au moins en partie de la réception du message d'accusé de réception négatif.

2. Équipement utilisateur selon la revendication 1, dans lequel la retransmission comprend des informations associées à l'augmentation d'un rapport signal/bruit de traitement pour la transmission compressée.

3. Équipement utilisateur selon l'une quelconque des revendications 1 à 2, dans lequel l'échec de la récupération réussie et de façon autonome de la transmission compressée est un échec de somme de contrôle.

4. Équipement utilisateur selon l'une quelconque des revendications 1 à 3, dans lequel le ou les processeurs sont en outre configurés pour :
identifier un échec de récupération de la transmission compressée après la transmission de la retransmission ; et
revenir à une procédure de retransmission de demande de répétition automatique hybride basée au moins en partie sur l'identification de l'échec de récupération de la transmission compressée après la transmission de la retransmission.

5. Équipement utilisateur selon l'une quelconque des revendications 1 à 4, dans lequel la retransmission comprend un message d'informations de système de puissance.

6. Station de base (110) pour la communication sans fil, comprenant :
une mémoire; et
un ou plusieurs processeurs couplés à la mémoire, la mémoire et le ou les processeurs étant configurés pour :
recevoir une transmission compressée comprenant un signal saturé transmis sans informations de suppression de crête décrivant les crêtes supprimés associés au signal saturé ;
transmettre, à un équipement utilisateur (120), un message d'accusé de réception négatif indiquant un échec de récupération réussie et de façon autonome de la transmission compressée ; et
recevoir, de l'équipement utilisateur, une retransmission pour permettre une récupération de distorsion sur le signal saturé sur la base au moins en partie de la transmission du message d'accusé de réception négatif, la retransmission indiquant les informations de suppression de crête sur la base au moins en partie de la réception du message d'accusé de réception négatif.

7. Station de base selon la revendication 6, dans laquelle le ou les processeurs sont en outre configurés pour :
tenter de récupérer et de décoder de façon autonome les blocs de transport de la transmission compressée ;
effectuer une somme de contrôle sur les blocs de transport de la transmission compressée pour déterminer si la récupération et le décodage des blocs de transport de la transmission compressée sont réussis ; et
dans lequel le ou les processeurs, lorsqu'ils sont configurés pour transmettre l'accusé de réception négatif, sont configurés pour :
transmettre l'accusé de réception négatif sur la base, au moins en partie, d'un résultat de l'exécution de la somme de contrôle.

8. Station de base selon l'une quelconque des revendications 6 à 7, dans laquelle le ou les processeurs sont en outre configurés pour :
tenter de récupérer et de décoder les blocs de transport de la transmission compressée à l'aide de la retransmission.

9. Station de base selon l'une quelconque des revendications 6 à 8, dans laquelle la retransmission comprend des informations associées à l'augmentation d'un rapport signal/bruit de traitement pour la transmission compressée.

10. Station de base selon l'une quelconque des revendications 6 à 9, dans laquelle le ou les processeurs sont en outre configurés pour :
identifier un échec de récupération de la transmission compressée après réception de la retransmission ; et
revenir à une procédure de retransmission de demande de répétition automatique hybride basée au moins en partie sur l'identification de l'échec de récupération de la transmission compressée après réception de la retransmission.

11. Station de base selon l'une quelconque des revendications 6 à 10, dans laquelle la retransmission comprend un message d'informations de système de puissance.

12. Procédé (500) de communication sans fil effectué par un équipement utilisateur, comprenant les étapes consistant à :
transmettre une transmission compressée comprenant un signal saturé transmis sans informations de suppression de crête qui décrit les crêtes supprimés associés au signal saturé ;
recevoir (510), depuis une station de base, un message d'accusé de réception négatif indiquant un échec de récupération réussie et de façon autonome de la transmission compressée ; et
transmettre (520), à la station de base, une retransmission pour permettre une récupération de distorsion sur le signal saturé sur la base au moins en partie de la réception du message d'accusé de réception négatif, la retransmission indiquant les informations de suppression de crête sur la base au moins en partie de la réception du message d'accusé de réception négatif.

13. Procédé selon la revendication 12, comprenant en outre les étapes consistant à :
identifier un échec de récupération de la transmission compressée après la transmission de la retransmission ; et
revenir à une procédure de retransmission de demande de répétition automatique hybride basée au moins en partie sur l'identification de l'échec de récupération de la transmission compressée après la transmission de la retransmission.

14. Procédé (600) de communication sans fil effectué par une station de base, comprenant les étapes consistant à :
recevoir une transmission compressée comprenant un signal saturé transmis sans informations de suppression de crête qui décrit les crêtes supprimés associés au signal saturé ;
transmettre (610), à un équipement utilisateur, un message d'accusé de réception négatif indiquant un échec de récupération réussie et de façon autonome de la transmission compressée ; et
recevoir (620), de l'équipement utilisateur, une retransmission pour permettre une récupération de distorsion sur le signal saturé sur la base au moins en partie de la réception du message d'accusé de réception négatif, la retransmission indiquant les informations de suppression de crête sur la base au moins en partie de la réception du message d'accusé de réception négatif.

15. Procédé selon la revendication 14, comprenant en outre les étapes consistant à :
identifier un échec de récupération de la transmission compressée après réception de la retransmission ; et
revenir à une procédure de retransmission de demande de répétition automatique hybride basée au moins en partie sur l'identification de l'échec de récupération de la transmission compressée après réception de la retransmission.
